# EUROPEAN PATENT SPECIFICATION

(11) **EP 3 248 105 B1**
(45) Date of publication and mention of the grant of the patent: **15.11.2023**
(21) Application number: 16740628.9
(22) Date of filing: 20.01.2016
(51) Int. Cl.: G06F 16/13, G06F 12/0806, G06F 13/42

(54) **OBJECT BASED MEMORY FABRIC**
OBJEKTBASIERTER SPEICHERSTOFF
TISSU DE MÉMOIRE BASÉE SUR UN OBJET

(30) Priority: 20.01.2015 US 201562105482 P
(43) Date of publication of application: 29.11.2017
(73) Proprietor: Ultrata LLC, Vienna, VA 22182 (US)
(72) Inventor: FRANK, Steven, Boulder, CO 80302 (US); REBACK, Larry, Vienna, VA 22182 (US)
(74) Representative: Platzöder, Michael Christian
(86) International application number: PCT/US2016/014013
(87) International publication number: WO 2016/118559

(56) References cited:
- US-A- 5 664 207
- US-A1- 2005 273 571
- US-A1- 2005 273 571
- US-A1- 2013 346 444
- US-A1- 2014 137 019
- US-A1- 2014 165 196
- US-A1- 2014 317 352
- DASGUPTA P ET AL: "The Clouds distributed operating system", COMPUTER, IEEE COMPUTER SOCIETY, USA, vol. 24, no. 11, 1 November 1991 (1991-11-01), pages 34-44, XP011416441, ISSN: 0018-9162, DOI: 10.1109/2.116849
- GRUBER O ET AL: "Eos, an environment for object-based systems", SYSTEM SCIENCES, 1992. PROCEEDINGS OF THE TWENTY-FIFTH HAWAII INTERNAT IONAL CONFERENCE ON KAUAI, HI, USA 7-10 JAN. 1, LOS ALAMITOS, CA, USA,IEEE COMPUT. SOC, US, vol. i, 7 January 1992 (1992-01-07), pages 757-768, XP010025825, DOI: 10.1109/HICSS.1992.183230 ISBN: 978-0-8186-2420-9
- STANKO NOVAKOVIC ET AL: "Scale-out NUMA", ARCHITECTURAL SUPPORT FOR PROGRAMMING LANGUAGES AND OPERATING SYSTEMS, ACM, 2 PENN PLAZA, SUITE 701 NEW YORK NY 10121-0701 USA, 24 February 2014 (2014-02-24), pages 3-18, XP058044551, DOI: 10.1145/2541940.2541965 ISBN: 978-1-4503-2305-5

## Description

### CROSS-REFERENCE TO RELATED APPLICATIONS

The present application claims benefit under 35 USC 119(e) of U. S. Provisional Application No. 62/105,482, filed on January 20, 2015 by Frank et al and entitled "Infinite Memory Fabric Architecture.

### BACKGROUND OF THE INVENTION

Embodiments of the present invention relate generally to methods and systems for improving performance of processing nodes in a fabric and more particularly to changing the way in which processing, memory, storage, network, and cloud computing, are managed to significantly improve the efficiency and performance of commodity hardware.

As the size and complexity of data and the processes performed thereon continually increases, computer hardware is challenged to meet these demands. Current commodity hardware and software solutions from established server, network and storage providers are unable to meet the demands of Cloud Computing and Big Data environments. This is due, at least in part, to the way in which processing, memory, and storage are managed by those systems. Specifically, processing is separated from memory which is turn is separated from storage in current systems and each of processing, memory, and storage is managed separately by software. Each server and other computing device (referred to herein as a node) is in turn separated from other nodes by a physical computer network, managed separately by software and in turn the separate processing, memory, and storage associated with each node are managed by software on that node.

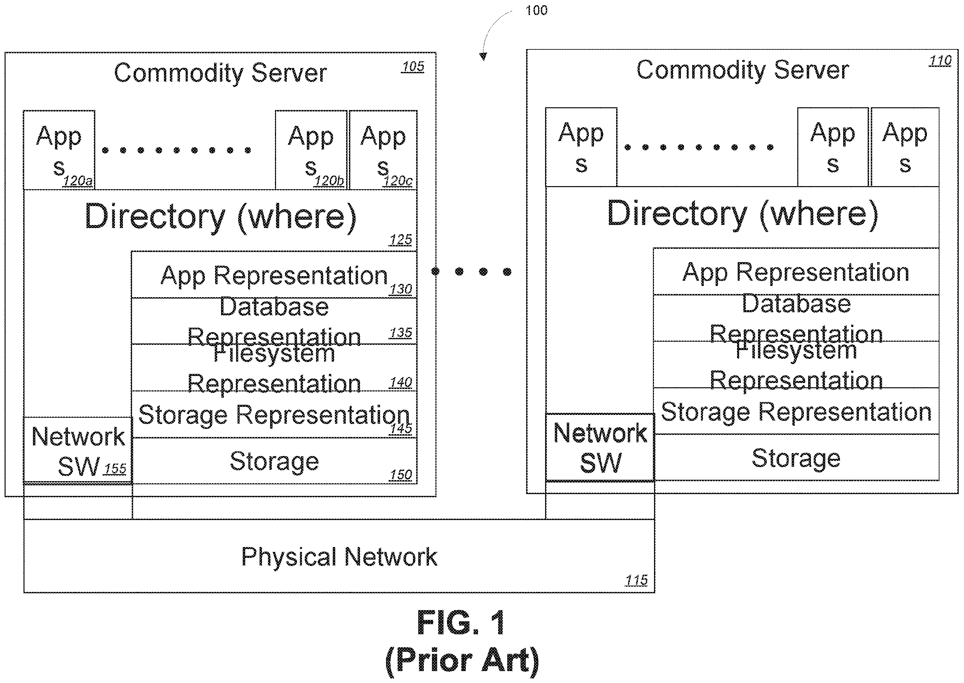

FIG. 1 is a block diagram illustrating an example of the separation data storage, memory, and processing within prior art commodity servers and network components. This example illustrates a system 100 in which commodity servers 105 and 110 are communicatively coupled with each other via a physical network 115 and network software 155 as known in the art. Also as known in the art, the servers can each execute any number of one or more applications 120a, 120b, 120c of any variety. As known in the art, each application 120a, 120b, 120c executes on a processor (not shown) and memory (not shown) of the server 105 and 110 using data stored in physical storage 150. Each server 105 and 110 maintains a directory 125 mapping the location of the data used by the applications 120a, 120b, 120c. Additionally, each server implements for each executing application 120a, 120b, 120c a software stack which includes an application representation 130 of the data, a database representation 135, a file system representation 140, and a storage representation 145.

While effective, there are three reasons that such implementations on current commodity hardware and software solutions from established server, network and storage providers are unable to meet the increasing demands of Cloud Computing and Big Data environments. One reason for the shortcomings of these implementations is their complexity. The software stack must be in place and every application must manage the separation of storage, memory, and processing as well as applying parallel server resources. Each application must trade-off algorithm parallelism, data organization and data movement which is extremely challenging to get correct, let alone considerations of performance and economics. This tends to lead to implementation of more batch oriented solutions in the applications, rather than the integrated real-time solutions preferred by most businesses. Additionally, separation of storage, memory, and processing, in such implementations also creates significant inefficiency for each layer of the software stack to find, move, and access a block of data due to the required instruction execution and latencies of each layer of the software stack and between the layers. Furthermore, this inefficiency limits the economic scaling possible and limits the data-size for all but the most extremely parallel algorithms. The reason for the latter is that the efficiency with which servers (processors or threads) can interact limits the amount of parallelism due to Amdahl's law. Hence, there is a need for improved methods and systems for managing processing, memory, and storage to significantly improve the performance of processing nodes.
US 2005/0273571 A1 discloses a distributed virtual multiprocessor having a plurality of nodes ) coupled to one another by a network.
US 2013/0346444 A1 discloses a network storage server system including a distributed object store and a metadata subsystem.
The article "The Clouds Distributed Operating System" by Dasgupta et al., IEEE Computer Society, USA, vol. 24, No. 11, 1 November 1991, discloses a distributed operating system/a control program running on a set of computers that are interconnected by a network.
The article *"*Eos, an Environment for Object-based Sytems" by Gruber et al., IEEE Computer Society, USA, vol. i, 7 January 1992, discloses a system which attempts to provide an environment for programming over distributed architectures.
The article *"Scale-Out NUMA"* by Novaković et al., Architectural Support for Programming ) Languages and Operating Systems, ACM, 24 February 2014, discloses an architecture, programming model and communication protocol for low-latency, distributed in-memory processing.

### BRIEF SUMMARY OF THE INVENTION

Embodiments of the invention provide systems and methods for managing processing, memory, storage, network, and cloud computing to significantly improve the efficiency and performance of processing nodes. Embodiments described herein can implement an object-based memory which manages the objects within the memory at the memory layer rather than in the application layer. That is, the objects and associated properties can be implemented and managed natively in memory enabling the object memory system to provide increased functionality without any software and increasing performance by dynamically managing object characteristics including, but not limited to persistence, location and processing. Object properties can also propagate up to higher application levels.

The invention is set out in independent claim 1.

### BRIEF DESCRIPTION OF THE DRAWINGS

FIG. 1 is a block diagram illustrating an example of the separation data storage, memory, processing, network, and cloud computing within prior art commodity servers and network components.
FIG. 2 is a block diagram illustrating components of an exemplary distributed system in which various embodiments of the present invention may be implemented.
FIG. 3 is a block diagram illustrating an exemplary computer system in which embodiments of the present invention may be implemented.
FIG. 4 is a block diagram illustrating an exemplary object memory fabric architecture according to one embodiment of the present invention.
FIG. 5 is a block diagram illustrating an exemplary memory fabric object memory according to one embodiment of the present invention.
FIG. 6 is a block diagram illustrating an exemplary object memory dynamics and physical organization according to one embodiment of the present invention.

### DETAILED DESCRIPTION OF THE INVENTION

In the following description, for the purposes of explanation, numerous specific details are set forth in order to provide a thorough understanding of various embodiments of the present invention. It will be apparent, however, to one skilled in the art that embodiments of the present invention may be practiced without some of these specific details. In other instances, well-known structures and devices are shown in block diagram form.

The ensuing description provides exemplary embodiments only, and is not intended to limit the scope, applicability, or configuration of the disclosure. Rather, the ensuing description of the exemplary embodiments will provide those skilled in the art with an enabling description for implementing an exemplary embodiment.

Specific details are given in the following description to provide a thorough understanding of the embodiments. However, it will be understood by one of ordinary skill in the art that the embodiments may be practiced without these specific details. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Also, it is noted that individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in a figure. A process may correspond to a method, a function, a procedure, a subroutine, a subprogram, etc. When a process corresponds to a function, its termination can correspond to a return of the function to the calling function or the main function.

The term "machine-readable medium" includes, but is not limited to portable or fixed storage devices, optical storage devices, wireless channels and various other mediums capable of storing, containing or carrying instruction(s) and/or data. A code segment or machine-executable instructions may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc. Various other terms used herein are now defined for the sake of clarity.

Virtual memory is a memory management technique that gives the illusion to each software process that memory is as large as the virtual address space. The operating system in conjunction with differing degrees of hardware manages the physical memory as a cache of the virtual address space, which is placed in secondary storage and accessible through Input/Output instructions. Virtual memory is separate from, but can interact with, a file system.

A single level store is an extension of virtual memory in which there are no files, only persistent objects or segments which are mapped into a processes' address space using virtual memory techniques. The entire storage of the computing system is thought of as a segment and address within a segment. Thus at least three separate address spaces, i.e., physical memory address/node, virtual address/process, and secondary storage address/disk, are managed by software.

Object storage refers to the way units of storage called objects are organized. Every object consists of a container that holds three things: actual data; expandable metadata; and a globally unique identifier referred to herein as the object address. The metadata of the object is used to define contextual information about the data and how it is used and managed including relationship to other objects.

The object address space is managed by software over storage devices, nodes, and network to find an object without knowing its physical location. Object storage is separate from virtual memory and single level store, but can certainly inter-operate through software.

Block storage consists of evenly sized blocks of data with an address based on a physical location and without metadata.

A network address is a physical address of a node within an IP network that is associated with a physical location.

A node or processing node is a physical unit of computing delineated by a shared physical memory that be addressed by any processor within the node.

Object memory is an object store directly accessible as memory by processor memory reference instructions and without implicit or explicit software or Input/Output instructions required. Object capabilities are directly provided within the object memory to processing through memory reference instructions.

An object memory fabric connects object memory modules and nodes into a single object memory where any object is local to any object memory module by direct management, in hardware, of object data, meta-data and object address.

An object router routes objects or portions of objects in an object memory fabric based on an object address. This is distinct from a conventional router which forwards data packets to appropriate part of a network based on a network address.

Embodiments may be implemented by hardware, software, firmware, middleware, microcode, hardware description languages, or any combination thereof. When implemented in software, firmware, middleware or microcode, the program code or code segments to perform the necessary tasks may be stored in a machine readable medium. A processor(s) may perform the necessary tasks.

Embodiments of the invention provide systems and methods for managing processing, memory, storage, network, and cloud computing to significantly improve the efficiency and performance of processing nodes. Embodiments described herein can be implemented in a set of hardware components that, in essence, change the way in which processing, memory, and storage, network, and cloud computing are managed by breaking down the artificial distinctions between processing, memory, storage and networking in today's commodity solutions to significantly improve the efficiency and performance of commodity hardware. For example, the hardware elements can include a standard format memory module, such as a (DIMM) and a set of one or more object routers. The memory module can be added to commodity or "off-the-shelf' hardware such a server node and acts as a big data accelerator within that node. Object routers can be used to interconnect two or more servers or other nodes adapted with the memory modules and help to manage processing, memory, and storage across these different servers. Nodes can be physically close or far apart. Together, these hardware components can be used with commodity servers or other types of computing nodes in any combination to implement the embodiments described herein.

According to the invention, hardware components implement an object-based memory which manages the objects within the memory and at the memory layer rather than in the application layer. That is, the objects and associated properties are implemented and managed natively in memory enabling the object memory system to provide increased functionality without any software and increasing performance by dynamically managing object characteristics including, but not limited to persistence, location and processing. Object properties can also propagate up to higher application levels.

Such hardware components can also eliminate the distinction between memory (temporary) and storage (persistent) by implementing and managing both within the objects. These components can eliminate the distinction between local and remote memory by transparently managing the location of objects (or portions of objects) so all objects appear simultaneously local to all nodes. These components can also eliminate the distinction between processing and memory through methods of the objects to place the processing within the memory itself.

According to one embodiment, such hardware components can eliminate typical size constraints on memory space of the commodity servers imposed by address sizes. Rather, physical addressing can be managed within the memory objects themselves and the objects are accessed and managed through the object name space.

Embodiment described herein can provide transparent and dynamic performance acceleration, especially with big data or other memory intensive applications by reducing or eliminating overhead typically associated with memory management, storage management, networking and data directories. Rather, management of the memory objects at the memory level can significantly shorten the pathways between storage and memory and between memory and processing, thereby eliminating the associated overhead between each. Various additional details of embodiments of the present invention will be described below with reference to the figures.

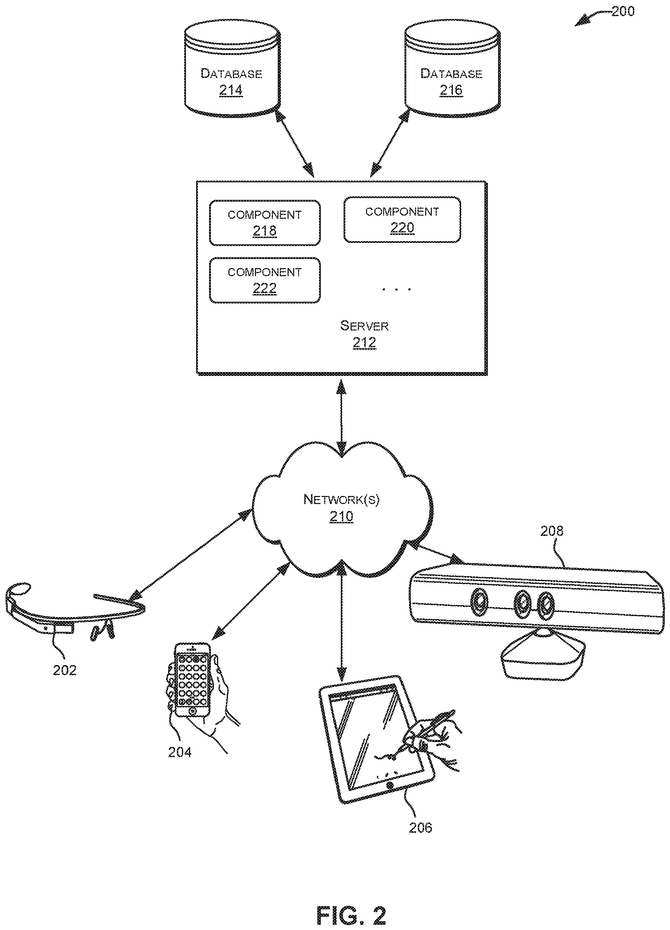

FIG. 2 is a block diagram illustrating components of an exemplary distributed system in which various embodiments of the present invention may be implemented. In the illustrated embodiment, distributed system 200 includes one or more client computing devices 202, 204, 206, and 208, which are configured to execute and operate a client application such as a web browser, proprietary client, or the like over one or more network(s) 210. Server 212 may be communicatively coupled with remote client computing devices 202, 204, 206, and 208 via network 210.

In various embodiments, server 212 may be adapted to run one or more services or software applications provided by one or more of the components of the system. In some embodiments, these services may be offered as web-based or cloud services or under a Software as a Service (SaaS) model to the users of client computing devices 202, 204, 206, and/or 208. Users operating client computing devices 202, 204, 206, and/or 208 may in turn utilize one or more client applications to interact with server 212 to utilize the services provided by these components. For the sake of clarity, it should be noted that server 212 and database 214, 216 can correspond to server 105 described above with reference to FIG. 1. Network 210 can be part of or an extension to physical network 115. It should also be understood that there can be any number of client computing devices 202, 204, 206, 208 and servers 212, each with one or more databases 214, 216.

In the configuration depicted in the figure, the software components 218, 220 and 222 of system 200 are shown as being implemented on server 212. In other embodiments, one or more of the components of system 200 and/or the services provided by these components may also be implemented by one or more of the client computing devices 202, 204, 206, and/or 208. Users operating the client computing devices may then utilize one or more client applications to use the services provided by these components. These components may be implemented in hardware, firmware, software, or combinations thereof. It should be appreciated that various different system configurations are possible, which may be different from distributed system 200. The embodiment shown in the figure is thus one example of a distributed system for implementing an embodiment system and is not intended to be limiting.

Client computing devices 202, 204, 206, and/or 208 may be portable handheld devices (e.g., an iPhone^{®}, cellular telephone, an iPad^{®}, computing tablet, a personal digital assistant (PDA)) or wearable devices (e.g., a Google Glass^{®} head mounted display), running software such as Microsoft Windows Mobile^{®}, and/or a variety of mobile operating systems such as iOS, Windows Phone, Android, BlackBerry 10, Palm OS, and the like, and being Internet, e-mail, short message service (SMS), Blackberry^{®}, or other communication protocol enabled. The client computing devices can be general purpose personal computers including, by way of example, personal computers and/or laptop computers running various versions of Microsoft Windows^{®}, Apple Macintosh^{®}, and/or Linux operating systems. The client computing devices can be workstation computers running any of a variety of commercially-available UNIX^{®} or UNIX-like operating systems, including without limitation the variety of GNU/Linux operating systems, such as for example, Google Chrome OS. Alternatively, or in addition, client computing devices 202, 204, 206, and 208 may be any other electronic device, such as a thinclient computer, an Internet-enabled gaming system (e.g., a Microsoft Xbox gaming console with or without a Kinect^{®} gesture input device), and/or a personal messaging device, capable of communicating over network(s) 210.

Although exemplary distributed system 200 is shown with four client computing devices, any number of client computing devices may be supported. Other devices, such as devices with sensors, etc., may interact with server 212.

Network(s) 210 in distributed system 200 may be any type of network familiar to those skilled in the art that can support data communications using any of a variety of commercially-available protocols, including without limitation TCP/IP (Transmission Control Protocol/Internet Protocol), SNA (Systems Network Architecture), IPX (Internet Packet Exchange), AppleTalk, and the like. Merely by way of example, network(s) 210 can be a Local Area Network (LAN), such as one based on Ethernet, Token-Ring and/or the like. Network(s) 210 can be a wide-area network and the Internet. It can include a virtual network, including without limitation a Virtual Private Network (VPN), an intranet, an extranet, a Public Switched Telephone Network (PSTN), an infra-red network, a wireless network (e.g., a network operating under any of the Institute of Electrical and Electronics (IEEE) 802.11 suite of protocols, Bluetooth^{®}, and/or any other wireless protocol); and/or any combination of these and/or other networks. Elements of such networks can have an arbitrary distance, i.e., can be remote or co-located. Software Defined Networks (SDNs) can be implemented with a combination of dumb routers and software running on servers.

Server 212 may be composed of one or more general purpose computers, specialized server computers (including, by way of example, Personal Computer (PC) servers, UNIX^{®} servers, mid-range servers, mainframe computers, rack-mounted servers, etc.), server farms, server clusters, or any other appropriate arrangement and/or combination. In various embodiments, server 212 may be adapted to run one or more services or software applications described in the foregoing disclosure. For example, server 212 may correspond to a server for performing processing described above according to an embodiment of the present disclosure.

Server 212 may run an operating system including any of those discussed above, as well as any commercially available server operating system. Server 212 may also run any of a variety of additional server applications and/or mid-tier applications, including HyperText Transport Protocol (HTTP) servers, File Transfer Protocol (FTP) servers, Common Gateway Interface (CGI) servers, JAVA^{®} servers, database servers, and the like. Exemplary database servers include without limitation those commercially available from Oracle, Microsoft, Sybase, International Business Machines (IBM), and the like.

In some implementations, server 212 may include one or more applications to analyze and consolidate data feeds and/or event updates received from users of client computing devices 202, 204, 206, and 208. As an example, data feeds and/or event updates may include, but are not limited to, Twitter^{®} feeds, Facebook^{®} updates or real-time updates received from one or more third party information sources and continuous data streams, which may include real-time events related to sensor data applications, financial tickers, network performance measuring tools (e.g., network monitoring and traffic management applications), clickstream analysis tools, automobile traffic monitoring, and the like. Server 212 may also include one or more applications to display the data feeds and/or real-time events via one or more display devices of client computing devices 202, 204, 206, and 208.

Distributed system 200 may also include one or more databases 214 and 216. Databases 214 and 216 may reside in a variety of locations. By way of example, one or more of databases 214 and 216 may reside on a non-transitory storage medium local to (and/or resident in) server 212. Alternatively, databases 214 and 216 may be remote from server 212 and in communication with server 212 via a network-based or dedicated connection. In one set of embodiments, databases 214 and 216 may reside in a Storage-Area Network (SAN). Similarly, any necessary files for performing the functions attributed to server 212 may be stored locally on server 212 and/or remotely, as appropriate. In one set of embodiments, databases 214 and 216 may include relational databases that are adapted to store, update, and retrieve data in response to commands, e.g., MySQL-formatted commands. Additionally or alternatively, server 212 can provide and support big data processing on unstructured data including but not limited to Hadoop processing, NoSQL databases, graph databases etc. In yet other implementations, server 212 may perform non-database types of bog data applications including but not limited to machine learning.

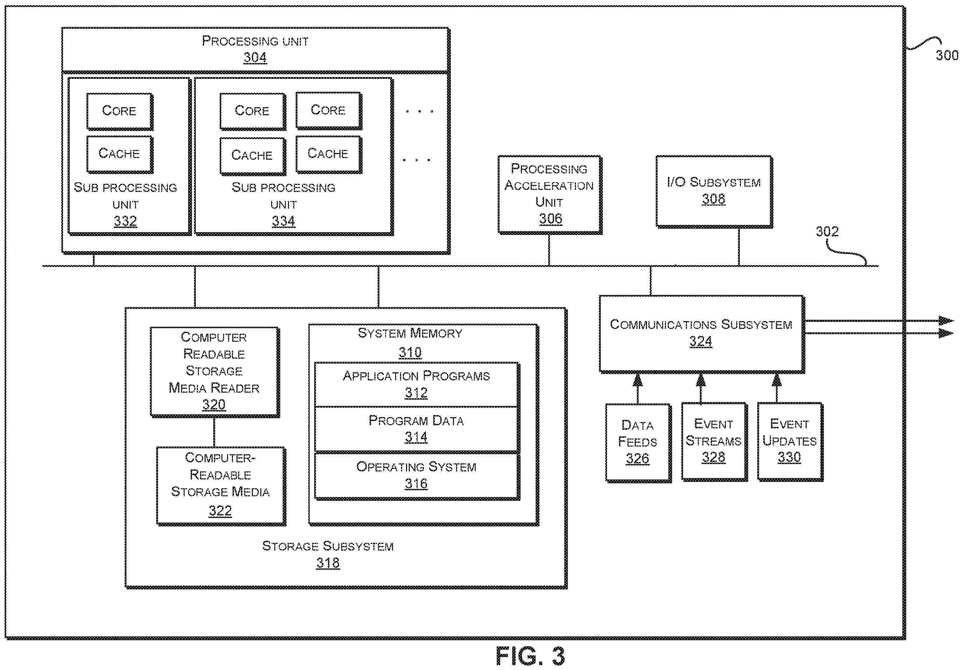

FIG. 3 is a block diagram illustrating an exemplary computer system in which embodiments of the present invention may be implemented. The system 300 may be used to implement any of the computer systems described above. As shown in the figure, computer system 300 includes a processing unit 304 that communicates with a number of peripheral subsystems via a bus subsystem 302. These peripheral subsystems may include a processing acceleration unit 306, an I/O subsystem 308, a storage subsystem 318 and a communications subsystem 324. Storage subsystem 318 includes tangible computer-readable storage media 322 and a system memory 310.

Bus subsystem 302 provides a mechanism for letting the various components and subsystems of computer system 300 communicate with each other as intended. Although bus subsystem 302 is shown schematically as a single bus, alternative embodiments of the bus subsystem may utilize multiple buses. Bus subsystem 302 may be any of several types of bus structures including a memory bus or memory controller, a peripheral bus, and a local bus using any of a variety of bus architectures. For example, such architectures may include an Industry Standard Architecture (ISA) bus, Micro Channel Architecture (MCA) bus, Enhanced ISA (EISA) bus, Video Electronics Standards Association (VESA) local bus, Peripheral Component Interconnect (PCI) bus, which can be implemented as a Mezzanine bus manufactured to the IEEE P1386.1 standard, or PCI enhanced (PCIe) bus.

Processing unit 304, which can be implemented as one or more integrated circuits (e.g., a conventional microprocessor or microcontroller), controls the operation of computer system 300. One or more processors may be included in processing unit 304. These processors may include single core or multicore processors. In certain embodiments, processing unit 304 may be implemented as one or more independent processing units 332 and/or 334 with single or multicore processors included in each processing unit. In other embodiments, processing unit 304 may also be implemented as a quad-core processing unit formed by integrating two dualcore processors into a single chip.

In various embodiments, processing unit 304 can execute a variety of programs in response to program code and can maintain multiple concurrently executing programs or processes. At any given time, some or all of the program code to be executed can be resident in processor(s) 304 and/or in storage subsystem 318. Through suitable programming, processor(s) 304 can provide various functionalities described above. Computer system 300 may additionally include a processing acceleration unit 306, which can include a Digital Signal Processor (DSP), a special-purpose processor, and/or the like.

I/O subsystem 308 may include user interface input devices and user interface output devices. User interface input devices may include a keyboard, pointing devices such as a mouse or trackball, a touchpad or touch screen incorporated into a display, a scroll wheel, a click wheel, a dial, a button, a switch, a keypad, audio input devices with voice command recognition systems, microphones, and other types of input devices. User interface input devices may include, for example, motion sensing and/or gesture recognition devices such as the Microsoft Kinect^{®} motion sensor that enables users to control and interact with an input device, such as the Microsoft Xbox^{®} 360 game controller, through a natural user interface using gestures and spoken commands. User interface input devices may also include eye gesture recognition devices such as the Google Glass^{®} blink detector that detects eye activity (e.g., 'blinking' while taking pictures and/or making a menu selection) from users and transforms the eye gestures as input into an input device (e.g., Google Glass^{®}). Additionally, user interface input devices may include voice recognition sensing devices that enable users to interact with voice recognition systems (e.g., Siri^{®} navigator), through voice commands.

User interface input devices may also include, without limitation, three dimensional (3D) mice, joysticks or pointing sticks, gamepads and graphic tablets, and audio/visual devices such as speakers, digital cameras, digital camcorders, portable media players, webcams, image scanners, fingerprint scanners, barcode reader 3D scanners, 3D printers, laser rangefinders, and eye gaze tracking devices. Additionally, user interface input devices may include, for example, medical imaging input devices such as computed tomography, magnetic resonance imaging, position emission tomography, medical ultrasonography devices. User interface input devices may also include, for example, audio input devices such as MIDI keyboards, digital musical instruments and the like.

User interface output devices may include a display subsystem, indicator lights, or nonvisual displays such as audio output devices, etc. The display subsystem may be a Cathode Ray Tube (CRT), a flat-panel device, such as that using a Liquid Crystal Display (LCD) or plasma display, a projection device, a touch screen, and the like. In general, use of the term "output device" is intended to include all possible types of devices and mechanisms for outputting information from computer system 300 to a user or other computer. For example, user interface output devices may include, without limitation, a variety of display devices that visually convey text, graphics and audio/video information such as monitors, printers, speakers, headphones, automotive navigation systems, plotters, voice output devices, and modems.

Computer system 300 may comprise a storage subsystem 318 that comprises software elements, shown as being currently located within a system memory 310. System memory 310 may store program instructions that are loadable and executable on processing unit 304, as well as data generated during the execution of these programs.

Depending on the configuration and type of computer system 300, system memory 310 may be volatile (such as Random Access Memory (RAM)) and/or non-volatile (such as Read-Only Memory (ROM), flash memory, etc.) The RAM typically contains data and/or program modules that are immediately accessible to and/or presently being operated and executed by processing unit 304. In some cases, system memory 310 can comprise one or more Double Data Rate fourth generation (DDR4) Dual Inline Memory Modules (DIMMs). In some implementations, system memory 310 may include multiple different types of memory, such as Static Random Access Memory (SRAM) or Dynamic Random Access Memory (DRAM). In some implementations, a Basic Input/Output System (BIOS), containing the basic routines that help to transfer information between elements within computer system 300, such as during startup, may typically be stored in the ROM. By way of example, and not limitation, system memory 310 also illustrates application programs 312, which may include client applications, Web browsers, mid-tier applications, Relational Database Management Systems (RDBMS), etc., program data 314, and an operating system 316. By way of example, operating system 316 may include various versions of Microsoft Windows^{®}, Apple Macintosh^{®}, and/or Linux operating systems, a variety of commercially-available UNIX^{®} or UNIX-like operating systems (including without limitation the variety of GNU/Linux operating systems, the Google Chrome^{®} OS, and the like) and/or mobile operating systems such as iOS, Windows^{®} Phone, Android^{®} OS, BlackBerry^{®} 10 OS, and Palm^{®} OS operating systems.

Storage subsystem 318 may also provide a tangible computer-readable storage medium for storing the basic programming and data constructs that provide the functionality of some embodiments. Software (programs, code modules, instructions) that when executed by a processor provide the functionality described above may be stored in storage subsystem 318. These software modules or instructions may be executed by processing unit 304. Storage subsystem 318 may also provide a repository for storing data used in accordance with the present invention.

Storage subsystem 300 may also include a computer-readable storage media reader 320 that can further be connected to computer-readable storage media 322. Together and, optionally, in combination with system memory 310, computer-readable storage media 322 may comprehensively represent remote, local, fixed, and/or removable storage devices plus storage media for temporarily and/or more permanently containing, storing, transmitting, and retrieving computer-readable information.

Computer-readable storage media 322 containing code, or portions of code, can also include any appropriate media known or used in the art, including storage media and communication media, such as but not limited to, volatile and non-volatile, removable and non-removable media implemented in any method or technology for storage and/or transmission of information. This can include tangible computer-readable storage media such as RAM, ROM, Electronically Erasable Programmable ROM (EEPROM), flash memory or other memory technology, CD-ROM, Digital Versatile Disk (DVD), or other optical storage, magnetic cassettes, magnetic tape, magnetic disk storage or other magnetic storage devices, or other tangible computer readable media. This can also include nontangible computer-readable media, such as data signals, data transmissions, or any other medium which can be used to transmit the desired information and which can be accessed by computing system 300.

By way of example, computer-readable storage media 322 may include a hard disk drive that reads from or writes to non-removable, nonvolatile magnetic media, a magnetic disk drive that reads from or writes to a removable, nonvolatile magnetic disk, and an optical disk drive that reads from or writes to a removable, nonvolatile optical disk such as a CD ROM, DVD, and Blu-Ray^{®} disk, or other optical media. Computer-readable storage media 322 may include, but is not limited to, Zip^{®} drives, flash memory cards, Universal Serial Bus (USB) flash drives, Secure Digital (SD) cards, DVD disks, digital video tape, and the like. Computer-readable storage media 322 may also include, Solid-State Drives (SSD) based on non-volatile memory such as flash-memory based SSDs, enterprise flash drives, solid state ROM, and the like, SSDs based on volatile memory such as solid state RAM, dynamic RAM, static RAM, DRAM-based SSDs, Magnetoresistive RAM (MRAM) SSDs, and hybrid SSDs that use a combination of DRAM and flash memory based SSDs. The disk drives and their associated computer-readable media may provide non-volatile storage of computer-readable instructions, data structures, program modules, and other data for computer system 300.

Communications subsystem 324 provides an interface to other computer systems and networks. Communications subsystem 324 serves as an interface for receiving data from and transmitting data to other systems from computer system 300. For example, communications subsystem 324 may enable computer system 300 to connect to one or more devices via the Internet. In some embodiments communications subsystem 324 can include Radio Frequency (RF) transceiver components for accessing wireless voice and/or data networks (e.g., using cellular telephone technology, advanced data network technology, such as 3G, 4G or Enhanced Data rates for Global Evolution (EDGE), WiFi (IEEE 802.11 family standards, or other mobile communication technologies, or any combination thereof), Global Positioning System (GPS) receiver components, and/or other components. In some embodiments communications subsystem 324 can provide wired network connectivity (e.g., Ethernet) in addition to or instead of a wireless interface. In some cases, communications subsystem 324 can be implemented in whole or in part as one or more PCIe cards.

In some embodiments, communications subsystem 324 may also receive input communication in the form of structured and/or unstructured data feeds 326, event streams 328, event updates 330, and the like on behalf of one or more users who may use computer system 300.

By way of example, communications subsystem 324 may be configured to receive data feeds 326 in real-time from users of social networks and/or other communication services such as Twitter^{®} feeds, Facebook^{®} updates, web feeds such as Rich Site Summary (RSS) feeds, and/or real-time updates from one or more third party information sources.

Additionally, communications subsystem 324 may also be configured to receive data in the form of continuous data streams, which may include event streams 328 of real-time events and/or event updates 330, that may be continuous or unbounded in nature with no explicit end. Examples of applications that generate continuous data may include, for example, sensor data applications, financial tickers, network performance measuring tools (e.g. network monitoring and traffic management applications), clickstream analysis tools, automobile traffic monitoring, and the like.

Communications subsystem 324 may also be configured to output the structured and/or unstructured data feeds 326, event streams 328, event updates 330, and the like to one or more databases that may be in communication with one or more streaming data source computers coupled to computer system 300.

Computer system 300 can be one of various types, including a handheld portable device (e.g., an iPhone^{®} cellular phone, an iPad^{®} computing tablet, a PDA), a wearable device (e.g., a Google Glass^{®} head mounted display), a PC, a workstation, a mainframe, a kiosk, a server rack, or any other data processing system.

Due to the ever-changing nature of computers and networks, the description of computer system 300 depicted in the figure is intended only as a specific example. Many other configurations having more or fewer components than the system depicted in the figure are possible. For example, customized hardware might also be used and/or particular elements might be implemented in hardware, firmware, software (including applets), or a combination. Further, connection to other computing devices, such as network input/output devices, may be employed. Based on the disclosure and teachings provided herein, a person of ordinary skill in the art will appreciate other ways and/or methods to implement the various embodiments.

As introduced above, embodiments of the invention provide systems and methods for managing processing, memory, storage, network, and cloud computing to significantly improve the efficiency and performance of processing nodes such as any of the servers or other computers or computing devices described above. Embodiments described herein can be implemented in a set of hardware components that, in essence, change the way in which processing, memory, storage, network, and cloud are managed by breaking down the artificial distinctions between processing, memory, storage and networking in today's commodity solutions to significantly improve the performance of commodity hardware. For example, the hardware elements can include a standard format memory module, such as a Dual Inline Memory Module (DIMM), which can be added to any of the computer systems described above. For example, the memory module can be added to commodity or "off-the-shelf' hardware such a server node and acts as a big data accelerator within that node. The components can also include one or more object routers. Object routers can include, for example, a PCI express card added to the server node along with the memory module and one or more external object routers such as rack mounted routers, for example. Object routers can be used to interconnect two or more servers or other nodes adapted with the memory modules and help to manage processing, memory, and storage across these different servers Object routers can forward objects or portions of objects based on object addresses and participate in operation of the object memory fabric. Together, these hardware components can be used with commodity servers or other types of computing nodes in any combination to implement an object memory fabric architecture.

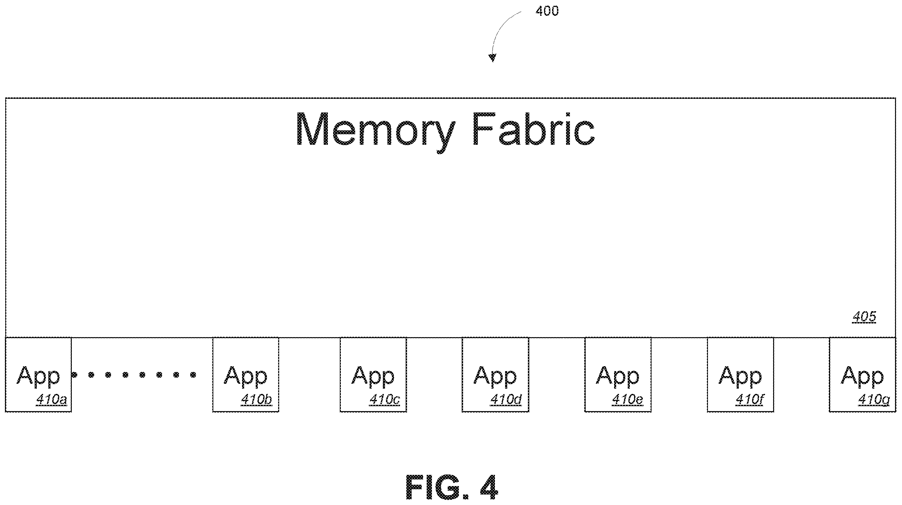

FIG. 4 is a block diagram illustrating an exemplary object memory fabric architecture according to one embodiment of the present invention. As illustrated here, the architecture 400 comprises an object memory fabric 405 supporting any number of applications 410a-g. As will be described in greater detail below, this object memory fabric 405 can comprise any number of processing nodes such as one or more servers having installed one or more memory modules as described herein. These nodes can be interconnected by one or more internal and/or external object routers as described herein. While described as comprising one or more servers, it should be noted that the processing nodes of the object memory fabric 405 can comprise any of a variety of different computers and/or computing devices adapted to operate within the object memory fabric 405 as described herein.

According to one embodiment, the object memory fabric 405 provides an object-based memory which manages memory objects within the memory of the nodes of the object memory fabric 405 and at the memory layer rather than in the application layer. That is, the objects and associated properties can be implemented and managed natively in the nodes of the object memory fabric 405 to provide increased functionality without any software and increasing efficiency and performance by dynamically managing object characteristics including, but not limited to persistence, location and processing. Object properties can also propagate to the applications 410a-g. The memory objects of the object memory fabric 405 can be used to eliminate typical size constraints on memory space of the commodity servers or other nodes imposed by address sizes. Rather, physical addressing can be managed within the memory objects themselves and the objects can in turn be accessed and managed through the object name space. The memory objects of the object memory fabric 405 can also be used to eliminate the distinction between memory (temporary) and storage (persistent) by implementing and managing both within the objects. The object memory fabric 405 can also eliminate the distinction between local and remote memory by transparently managing the location of objects (or portions of objects) so all objects appear simultaneously local to all nodes. The memory objects can also eliminate the distinction between processing and memory through methods of the objects to place the processing within the memory itself. In other words, embodiments of the present invention provide a single-level memory that puts the computes with the storage and the storage with the computes, directly and thereby eliminating numerous levels of software overhead communicating across these levels and the artificial overhead of moving data to be processed.

In these ways, embodiments of the object memory fabric 405 and components thereof as described herein can provide transparent and dynamic performance acceleration, especially with big data or other memory intensive applications by reducing or eliminating overhead typically associated with memory management, storage management, networking, data directories, and data buffers at both the system and application software layers. Rather, management of the memory objects at the memory level can significantly shorten the pathways between storage and memory and between memory and processing, thereby eliminating the associated overhead between each.

Embodiments provide coherent, hardware-based, infinite memory managed as memory objects with performance accelerated in-memory, spanning all nodes, and scalable across all nodes. This enables transparent dynamic performance acceleration based on the object and end application. Using an architecture according to embodiments of the present invention, applications and system software can be treated the same and as simple as a single, standard server but additionally allowing memory fabric objects to capture heuristics. Embodiments provide multiple dimensions of accelerated performance including locality acceleration. According to one embodiment, object memory fabric metadata associated with the memory objects can include triggers which enable the object memory fabric architecture to localize and move data to fast dram memory ahead of use. Triggers can be a fundamental generalization that enables the memory system to execute arbitrary functions based on memory access. Various embodiments can also include an instruction set which can provide a unique instruction model for the object memory fabric based on the triggers defined in the metadata associated with each memory object and that supports core operations and optimizations and allows the memory intensive portion of applications to be more efficiently executed in a highly parallel manner within IMF.

Embodiments can also decrease software path-length by substituting a small number of memory references for a complex application, storage and network stack. This can be accomplished when memory and storage is directly addressable as memory under embodiments of the present invention. Embodiments can additionally provide accelerated performance of high level memory operations. For many cases, embodiments of the object memory fabric architecture can eliminate the need to move data to the processor and back to memory, which is extremely inefficient for today's modern processors with three or more levels of caches.

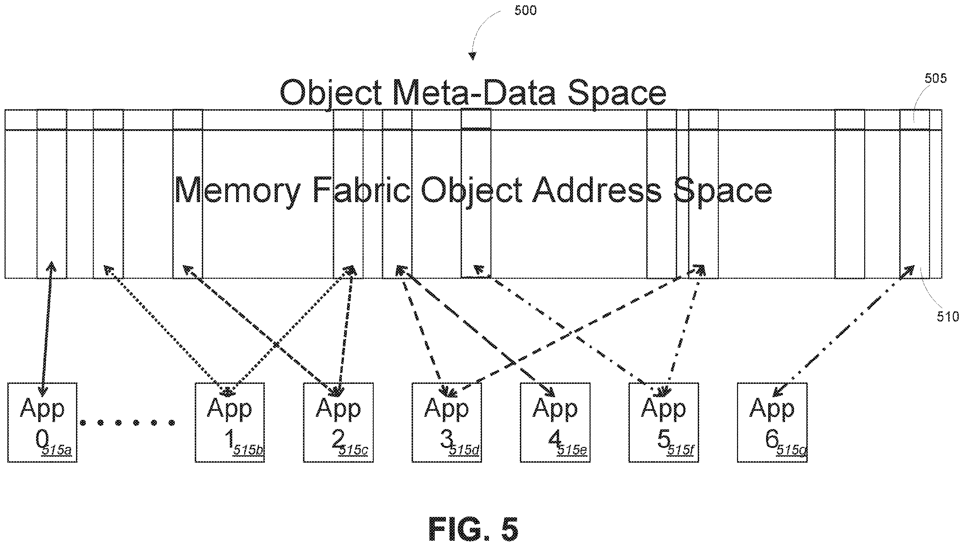

FIG. 5 is a block diagram illustrating an exemplary memory fabric object memory according to one embodiment of the present invention. More specifically, this example illustrates an application view of how memory fabric object memory can be organized. Memory fabric object address space 500 can be a 128 bit linear address space where the object ID corresponds to the start of the addressable object. Objects 510 can be variable size from 2¹² to 2⁶⁴ bytes. The address space 500 can efficiently be utilized sparsely within and across objects as object storage is allocated on a per block basis. The size of the object space 500 is meant to be large enough that garbage collection is not necessary and to enable disjoint systems to be easily combined.

Object metadata 505 associated with each object 510 can be transparent with respect to the object address space 500 and can utilize the object memory fabric to manage objects and blocks within objects and are accessible at appropriate privilege by applications 515a-g through Application Program Interfaces (APIs) of the object memory fabric. This API provides functions for applications to set up and maintain the object memory fabric, for example by using modified Linux libc. With a small amount of additional effort applications such as a SQL database or graph database can utilize the API to create memory objects and provide and/or augment object metadata to allow the object memory fabric to better manage objects. Object metadata 505 can include object methods, which enable performance optimization through dynamic object-based processing, distribution, and parallelization. Metadata can enable each object to have a definable security policy and access encapsulation within an object.

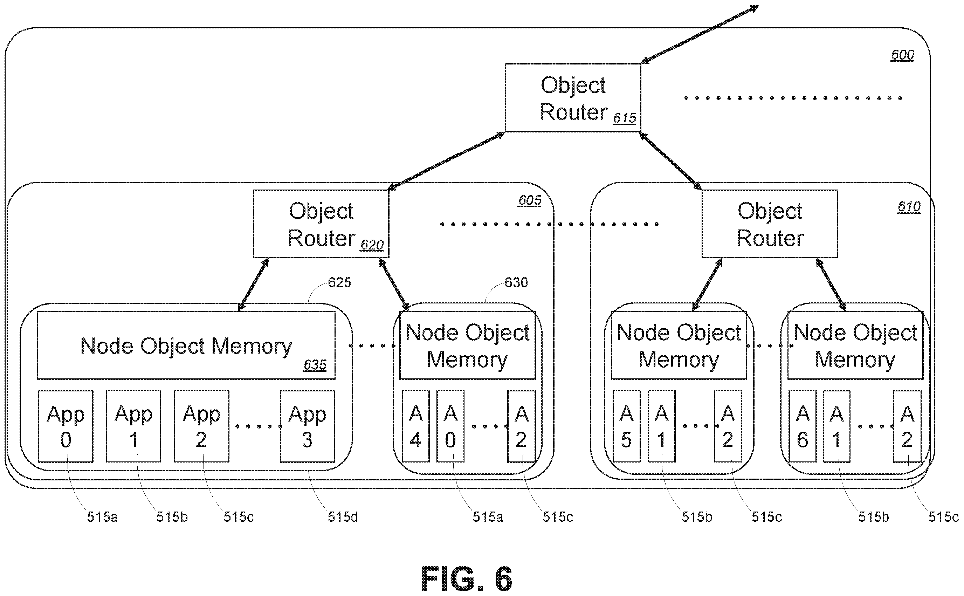

According to embodiments of the present invention, applications 515a-g can now access a single object that captures it's working and/or persistent data (such as App0 515a) or multiple objects for finer granularity (such as App1 515b). Applications can also share objects. Object memory 500 according to these embodiments can physically achieves this powerfully simple application view with a combination of physical organization, which will be described in greater detail below with reference to FIG. 6, and object memory dynamics. Generally speaking, the object memory 500 can be organized as a distributed hierarchy that creates hierarchical neighborhoods for object storage and applications 515a-g. Object memory dynamics interact and leverage the hierarchal organization to dynamically create locals of objects and applications (object methods) that operate on objects. Since object methods can be associated with memory objects, as objects migrate and replicate on the memory fabric, object methods naturally gain increased parallelism as object size warrants. The hierarchy in conjunction with object dynamics can further create neighborhoods of neighborhoods based on the size and dynamics of the object methods.

FIG. 6 is a block diagram illustrating an exemplary object memory dynamics and physical organization according to one embodiment of the present invention. As illustrated in this example, an object memory fabric 600 as described above can include any number of processing nodes 605 and 610 communicatively coupled via one or more external object routers 615. Each node 605 and 610 can also include an internal object router 620 and one or more memory modules. Each memory module 625 can include a node object memory 635 supporting any number of applications 515a-g. Generally speaking, the memory module 625, node object router 620 and inter-node object router 615 can all share a common functionality with respect to the object memory 635 and index thereof. In other words, the underlying design objects can be reused in all three providing a common design adaptable to hardware of any of a variety of different form factors and types in addition to those implementations described here by way of example.

More specifically, a node can comprise a single node object router 620 and one or more memory modules 625 and 630. According to one embodiment, a node 605 can comprise a commodity or "off-the-shelf' server, the memory module 625 can comprise a standard format memory card such as a Dual-Inline Memory Module (DIMM) card, and the node object router 620 can similarly comprise a standard format card such as a Peripheral Component Interconnect express (PCIe) card. The node object router 620 can implement an object index covering the objects/blocks held within the object memory(s) 635 of the memory modules 625 and 630 within the same node 605. Each memory module 625 and 630 can hold the actual objects and blocks within objects, corresponding object meta-data, and object index covering objects currently stored local to that memory module. Each memory module 625 and 630 can independently manage both dram memory (fast and relatively expensive) and flash memory (not as fast, but much less expensive) in a manner that the processor (not shown) of the node 605 thinks that there is the flash amount of fast dram. The memory modules 625 and 630 and the node object router 620 can both manage free storage through a free storage index implemented in the same manner as for other indexes. Memory modules 625 and 630 can be directly accessed over the standard DDR memory bus by processor caches and processor memory reference instructions. In this way, the memory objects of the memory modules 625 and 630 are accessed using only conventional memory reference instructions and without implicit or explicit Input/Output (I/O) instructions.

Objects within the object memory 635 of each node 625 can be created and maintained through an object memory fabric API (not shown). The node object router 620 can communicate with the API through a modified object memory fabric version of libc and an object memory fabric driver (not shown). The node object router 620 can then update a local object index, send commands toward a root, i.e., towards the inter-node object router 615, as required and communicate with the appropriate memory module 625 or 630 to complete the API command locally. The memory module 625 or 630 can communicate administrative requests back to the node object router 620 which can handle them appropriately.

According to one embodiment, the internal architecture of the node object router 620 can be very similar to the memory module 625 with the differences related to routing functionality such as managing a node memory object index and routing appropriate packets to and from the memory moduels 625 and 630 and the inter-node object router 615. That is, the node object router 620 can have additional routing functionality but does not need to actually store memory objects.

The inter-node object router 615 can be considered analogous to an IP router. However, the first difference is the addressing model used. IP routers utilize a fixed static address per each node and routes based on the destination IP address to a fixed physical node. However, the inter-node object router 615 of the object memory fabric 600 utilizes a memory fabric object address (OA) which specifies the object and specific block of the object. Objects and blocks can dynamically reside at any node. The inter-node object router 615 can route OA packages based on the dynamic location(s) of objects and blocks and track object/block location dynamically in real time. The second difference is that the object router can implement the object memory fabric distributed protocol which provides the dynamic nature of object/block location and object functions, for example including, but not limited, to triggers. The inter-node object router 615 can be implemented as a scaled up version of node object router 620 with increased object index storage capacity, processing rate and overall routing bandwidth. Also, instead of connecting to a single PCIe or other bus or channel to connect to memory modules, inter-node object router 615 can connect to multiple node object routers and/or multiple other inter-node object routers. According to one embodiment, a node object router 620 can communicate with the memory modules 625 and 630 with direct memory access over PCIe and the memory bus (not shown) of the node 605. Node object routers of different nodes 605 and 610 can in turn connect with one or more inter-node object routers 615 over a high-speed network (not shown) such as 25/100GE fiber that uses several layers of Gigabit Ethernet protocol or object memory fabric protocol tunneled through standard IP, for example. Multiple inter-node object routers can connect with the same network.

In operation, the memory fabric object memory can physically achieve its powerfully simple application view described above with reference to FIGs. 4 and 5 with a combination of physical organization and object memory dynamics. According to one embodiment and as introduced above with reference to FIG. 5, the memory fabric object memory can be organized as a distributed hierarchy that creates hierarchical neighborhoods for object storage and applications 515a-g. The node object routers can keep track of which objects and portions of objects are local to a neighborhood. The actual object memory can be located on nodes 605 or 610 close to applications 515a-g and memory fabric object methods.

Also as introduced above, object memory dynamics can interact and leverage the hierarchal organization to dynamically create locals of objects and applications (object methods) that operate on objects. Since object methods can be associated with objects as objects migrate and replicate across nodes, object methods naturally gain increased parallelism as object size warrants. This object hierarchy, in conjunction with object dynamics, can in turn create neighborhoods of neighborhoods based on the size and dynamics of the object methods.

For example, AppO 515a spans multiple memory modules 625 and 630 within a single level object memory fabric neighborhood, in this case node 605. Object movement can stay within that neighborhood and its node object router 620 without requiring any other communication links or routers. The self-organizing nature along the hierarchy defined neighborhoods provides efficiency from a performance and minimum bandwidth perspective. In another example, App1 (A1) 515b can have the same characteristic but in a different neighborhood, i.e., in node 610. App2 (A2) 515c can be a parallel application across a two-level hierarchy neighborhood, i.e., nodes 605 and 610. Interactions can be self-contained in the respective neighborhood.

In the foregoing description, for the purposes of illustration, methods were described in a particular order. It should be appreciated that in alternate embodiments, the methods may be performed in a different order than that described. It should also be appreciated that the methods described above may be performed by hardware components or may be embodied in sequences of machine-executable instructions, which may be used to cause a machine, such as a general-purpose or special-purpose processor or logic circuits programmed with the instructions to perform the methods. These machine-executable instructions may be stored on one or more machine readable mediums, such as CD-ROMs or other type of optical disks, floppy diskettes, ROMs, RAMs, EPROMs, EEPROMs, magnetic or optical cards, flash memory, or other types of machine-readable mediums suitable for storing electronic instructions. Alternatively, the methods may be performed by a combination of hardware and software.

## Claims

1. A hardware-based processing node (605, 610) of an object memory fabric (405, 600), the processing node (605, 610) comprising:
a memory module (625, 630) comprising a hardware component installed in the hardware-based processing node (605, 610), the memory module (625, 630) being arranged to store and manage one or more memory objects, the application data and metadata local to, and arranged to be stored within, the memory object, each memory object having one or more properties associated with the memory object and a globally unique object name in a name space of the object memory fabric, wherein:
each memory object is arranged to be created by the hardware of the memory module (625, 630) through the name space of the object memory fabric (405, 600),
each memory object is arranged to be accessed by applications (410a-g, 515a-g) executing on the hardware-based processing node (605, 610) through the hardware of the memory module (625, 630) using a single memory reference instruction by the applications (410a-g, 515a-g), and
each memory object is arranged to be managed by the hardware of the memory module (625, 630) through the name space of the object memory fabric (405, 600) based on metadata of the memory object, the metadata defining contextual information about data of the memory object, use and management of the memory object, and relationships to other memory objects, the metadata being accessible by the applications executing on the hardware-based processing node through an Application Program Interface (API) of the object memory fabric.

2. The hardware-based processing node of claim 1, wherein the memory module is arranged to dynamically manage properties of the one or more memory objects, the properties of the one or more memory objects comprising one or more of persistence, location, or processing.

3. The hardware-based processing node of claim 2, wherein the memory module is arranged to propagate the properties of each memory object to an application level.

4. The hardware-based processing node of claim 2, wherein the object memory fabric comprises a plurality of hardware-based processing nodes.

5. The hardware-based processing node of claim 4, wherein each memory object and the properties of each memory object are arranged to be maintained on any one or more of the plurality of nodes in the object memory fabric, wherein managing the memory objects includes maintaining the memory objects and properties of the memory objects as the memory objects are moved, split, or duplicated between nodes.

6. The hardware-based processing node of claim 1, wherein the hardware-based processing node comprises a Dual In-line Memory Module (DIMM) card.

7. The hardware-based processing node of claim 1, wherein the hardware-based processing node comprises a commodity server and wherein the memory module comprises a Dual In-line Memory Module (DIMM) card installed within the commodity server.

8. The hardware-based processing node of claim 7, further comprising a communication interface coupled with the object memory fabric.

9. The hardware-based processing node of claim 8, wherein the communication interface comprises a Peripheral Component Interconnect Express (PCI-e) card.

10. The hardware-based processing node of claim 1, wherein the hardware-based processing node comprises a mobile computing device.

11. The hardware-based processing node of claim 1, wherein the hardware-based processing node comprises a single chip.

12. An object memory fabric (405, 600) comprising:
a plurality of hardware-based processing nodes (605, 610) according to any one of the preceding claims.

13. The object memory fabric (405, 600) of claim 12, wherein each memory object is arranged to be accessed by applications (410a-g, 515a-g) executing on any of the hardware-based processing nodes (605, 610) through the hardware of the memory module (625, 630) using a single memory reference instruction by the applications (410a-g, 515a-g).

14. The object memory fabric (405, 600) of claim 12 or 13, wherein each hardware-based processing node (605, 610) further comprises:
a node router (620) communicatively coupled with each of the one or more memory modules (625, 630) of the node (605, 610) and adapted to route memory objects or portions of memory objects between the one or more memory modules (625, 630) of the node (605, 610); and
one or more inter-node routers (615) communicatively coupled with each node router (620), wherein each of the plurality of nodes (605, 610) of the object memory fabric (405, 600) is communicatively coupled with at least one of the inter-node routers (615) and adapted to route memory objects or portions of memory objects between the plurality of nodes (605, 610).

## Patentansprüche

1. Ein auf Hardware basierender Verarbeitungsknoten (605, 610) einer Objektspeicherstruktur (405, 600), wobei der Verarbeitungsknoten (605, 610) aufweist:
ein Speichermodul (625, 630), das eine Hardwarekomponente aufweist, die in dem auf Hardware basierenden Verarbeitungsknoten (605, 610) installiert ist, wobei das Speichermodul (625, 630) dazu eingerichtet ist, ein oder mehrere Speicherobjekte zu speichern und zu verwalten, wobei die Anwendungsdaten und Metadaten für das Speicherobjekt lokal sind und dazu eingerichtet sind, in dem Speicherobjekt gespeichert zu werden, wobei jedes Speicherobjekt eine oder mehrere Eigenschaften hat, die mit dem Speicherobjekt verbunden sind, und wobei jedes Speicherobjekt einen global eindeutigen Objektnamen in einem Namensraum der Objektspeicherstruktur hat, wobei:
jedes Speicherobjekt dazu eingerichtet ist, dass es von der Hardware des Speichermoduls (625, 630) über den Namensraum der Objektspeicherstruktur (405, 600) erstellt werden kann,
jedes Speicherobjekt dazu eingerichtet ist, dass ein Zugriff auf dieses durch Anwendungen (410a-g, 515a-g), die auf dem auf Hardware basierenden Verarbeitungsknoten (605, 610) ausgeführt werden, über die Hardware des Speichermoduls (625, 630) unter Verwendung eines einzigen Speicherreferenzbefehls durch die Anwendungen (410a-g, 515a-g) erfolgen kann, und
jedes Speicherobjekt dazu eingerichtet ist, dass es von der Hardware des Speichermoduls (625, 630) über den Namensraum der Objektspeicherstruktur (405, 600) auf der Grundlage von Metadaten des Speicherobjekts verwaltet werden kann, wobei die Metadaten Kontextinformationen über Daten des Speicherobjekts, die Verwendung und die Verwaltung des Speicherobjekts und Beziehungen zu anderen Speicherobjekten definieren, wobei auf die Metadaten durch die Anwendungen, die auf dem auf Hardware basierenden Verarbeitungsknoten ausgeführt werden, über eine Anwendungsprogrammschnittstelle (API) der Objektspeicherstruktur zugegriffen werden kann.

2. Der auf Hardware basierende Verarbeitungsknoten nach Anspruch 1, wobei das Speichermodul dazu eingerichtet ist, dass es die Eigenschaften des einen oder der mehreren Speicherobjekte dynamisch verwaltet, wobei die Eigenschaften des einen oder der mehreren Speicherobjekte eines oder mehrere der Eigenschaften Persistenz, Ort oder Verarbeitung aufweisen.

3. Der auf Hardware basierende Verarbeitungsknoten nach Anspruch 2, wobei das Speichermodul dazu eingerichtet ist, dass es die Eigenschaften eines jeden Speicherobjekts an eine Anwendungsebene weitergibt.

4. Der auf Hardware basierende Verarbeitungsknoten nach Anspruch 2, wobei die Objektspeicherstruktur eine Mehrzahl von auf Hardware basierenden Verarbeitungsknoten aufweist.

5. Der auf Hardware basierende Verarbeitungsknoten nach Anspruch 4, wobei jedes Speicherobjekt und die Eigenschaften eines jeden Speicherobjekts dazu eingerichtet sind, dass sie auf einem beliebigen oder auf mehreren der Mehrzahl von Knoten in der Objektspeicherstruktur beibehalten werden können, wobei das Verwalten der Speicherobjekte das Beibehalten der Speicherobjekte und der Eigenschaften der Speicherobjekte einschließt, wenn die Speicherobjekte zwischen den Knoten verschoben, aufgeteilt oder dupliziert werden.

6. Der auf Hardware basierende Verarbeitungsknoten nach Anspruch 1, wobei der auf Hardware basierende Verarbeitungsknoten eine Dual In-line Memory Module Karte, DIMM Karte, aufweist.

7. Der auf Hardware basierende Verarbeitungsknoten nach Anspruch 1, wobei der auf Hardware basierende Verarbeitungsknoten einen handelsüblichen Server aufweist und wobei das Speichermodul eine Dual In-line Memory Module Karte, DIMM Karte, aufweist, die in dem handelsüblichen Server installiert ist.

8. Der auf Hardware basierende Verarbeitungsknoten nach Anspruch 7, wobei der auf Hardware basierende Verarbeitungsknoten ferner eine Kommunikationsschnittstelle aufweist, die mit der Objektspeicherstruktur gekoppelt ist.

9. Der auf Hardware basierende Verarbeitungsknoten nach Anspruch 8, wobei die Kommunikationsschnittstelle eine Peripheral Component Interconnect Express, PCI-e, Karte aufweist.

10. Der auf Hardware basierende Verarbeitungsknoten nach Anspruch 1, wobei der auf Hardware basierende Verarbeitungsknoten ein mobiles Rechengerät aufweist.

11. Der auf Hardware basierende Verarbeitungsknoten nach Anspruch 1, wobei der auf Hardware basierende Verarbeitungsknoten einen einzelnen Chip aufweist.

12. Objektspeicherstruktur (405, 600), aufweisend:
eine Mehrzahl von auf Hardware basierenden Verarbeitungsknoten (605, 610) nach einem der vorhergehenden Ansprüche.

13. Objektspeicherstruktur (405, 600) nach Anspruch 12, wobei jedes Speicherobjekt dazu eingerichtet ist, dass ein Zugriff auf dieses durch Anwendungen (410a-g, 515a-g), die auf einem beliebigen der auf Hardware basierenden Verarbeitungsknoten (605, 610) ausgeführt werden, über die Hardware des Speichermoduls (625, 630) unter Verwendung eines einzigen Speicherreferenzbefehls durch die Anwendungen (410a-g, 515a-g) erfolgen kann.

14. Objektspeicherstruktur (405, 600) nach Anspruch 12 oder 13, wobei ein jeder der auf Hardware basierenden Verarbeitungsknoten (605, 610) ferner aufweist:
einen Knoten-Router (620), der hinsichtlich Kommunikation mit einem jeden des einen oder der mehreren Speichermodule (625, 630) des Knotens (605, 610) gekoppelt ist und dazu eingerichtet ist, Speicherobjekte oder Teile von Speicherobjekten zwischen dem einen oder den mehreren Speichermodulen (625, 630) des Knotens (605, 610) zu leiten; und
einen oder mehrere Zwischenknoten-Router (615), die hinsichtlich Kommunikation mit einem jeden der Knoten-Router (620) gekoppelt ist bzw. sind, wobei ein jeder der Mehrzahl von Knoten (605, 610) der Objektspeicherstruktur (405, 600) hinsichtlich Kommunikation mit wenigstens einem der Zwischenknoten-Router (615) gekoppelt ist und dazu eingerichtet ist, Speicherobjekte oder Teile von Speicherobjekten zwischen der Mehrzahl von Knoten (605, 610) zu leiten.

## Revendications

1. Noeud de traitement basé sur matériel (605, 610) d'une matrice de mémoire d'objets (405, 600), le noeud de traitement (605, 610) comprenant :
un module de mémoire (625, 630) comprenant un composant matériel installé dans le noeud de traitement basé sur matériel (605, 610), le module de mémoire (625, 630) étant conçu pour stocker et gérer un ou plusieurs objet(s) de mémoire, les données d'application et métadonnées locales de l'objet de mémoire et conçues pour être stockées dans celui-ci, chaque objet de mémoire ayant une ou plusieurs propriété(s) associée(s) à l'objet de mémoire et un nom d'objet généralement unique dans un espace de nom de la matrice de mémoire d'objets, dans lequel :
chaque objet de mémoire est conçu pour être créé par le matériel du module de mémoire (625, 630) par l'intermédiaire de l'espace de nom de la matrice de mémoire d'objets (405, 600),
chaque objet de mémoire est conçu pour être accessible par des applications (410a-g, 515a-g) s'exécutant sur le noeud de traitement basé sur matériel (605, 610) par l'intermédiaire du matériel du module de mémoire (625, 630) à l'aide d'une unique instruction de référence de mémoire par les applications (410a-g, 515a-g), et
chaque objet de mémoire est conçu pour être géré par le matériel du module de mémoire (625, 630) par l'intermédiaire de l'espace de mémoire de la matrice de mémoire d'objets (405, 600) sur la base de métadonnées de l'objet de mémoire, les métadonnées définissant des informations contextuelles concernant des données de l'objet de mémoire, l'utilisation et la gestion de l'objet de mémoire et des relations à d'autres objets de mémoire, les métadonnées étant accessibles par les applications s'exécutant sur le noeud de traitement basé sur matériel par l'intermédiaire d'une interface de programmation d'applications (API) de la matrice de mémoire d'objets.

2. Noeud de traitement basé sur matériel selon la revendication 1, dans lequel le module de mémoire est conçu pour gérer dynamiquement des propriétés des un ou plusieurs objet(s) de mémoire, les propriétés des un ou plusieurs objet(s) de mémoire comprenant un ou plusieurs parmi une persistance, un emplacement ou un traitement.

3. Noeud de traitement basé sur matériel selon la revendication 2, dans lequel le module de mémoire est conçu pour propager les propriétés de chaque objet de mémoire vers un niveau d'application.

4. Noeud de traitement basé sur matériel selon la revendication 2, dans lequel la matrice de mémoire d'objets comprend une pluralité de noeuds de traitement basés sur matériel.

5. Noeud de traitement basé sur matériel selon la revendication 4, dans lequel chaque objet de mémoire et les propriétés de chaque objet de mémoire sont conçus pour être maintenus sur l'un quelconque ou plusieurs de la pluralité de noeuds dans la matrice de mémoire d'objets, dans lequel la gestion des objets de mémoire comporte le maintien des objets de mémoire et des propriétés des objets de mémoire à mesure que les objets de mémoire sont déplacés, divisés ou reproduits entre noeuds.

6. Noeud de traitement basé sur matériel selon la revendication 1, dans lequel le noeud de traitement basé sur matériel comprend une carte de module de mémoire à double rangée de connexions (DIMM).

7. Noeud de traitement basé sur matériel selon la revendication 1, dans lequel le noeud de traitement basé sur matériel comprend un serveur standard et dans lequel le module de mémoire comprend une carte de module de mémoire à double rangée de connexions (DIMM) installée à l'intérieur du serveur standard.

8. Noeud de traitement basé sur matériel selon la revendication 7, comprenant en outre une interface de communication couplée avec la matrice de mémoire d'objets.

9. Noeud de traitement basé sur matériel selon la revendication 8, dans lequel l'interface de communication comprend une carte d'interconnexion de composants périphériques express (PCI-e).

10. Noeud de traitement basé sur matériel selon la revendication 1, dans lequel le noeud de traitement basé sur matériel comprend un dispositif informatique mobile.

11. Noeud de traitement basé sur matériel selon la revendication 1, dans lequel le noeud de traitement basé sur matériel comprend une puce unique.

12. Matrice de mémoire d'objets (405, 600), comprenant : une pluralité de noeuds de traitement basés sur matériel (605, 610) selon l'une quelconque des revendications précédentes.

13. Matrice de mémoire d'objets (405, 600) selon la revendication 12, dans laquelle chaque objet de mémoire est conçu pour être accessible par des applications (410a-g, 515a-g) s'exécutant sur l'un quelconque des noeuds de traitement basés sur matériel (605, 610) par l'intermédiaire du matériel du module de mémoire (625, 630) à l'aide d'une unique instruction de référence de mémoire par les applications (410a-g, 515a-g).

14. Matrice de mémoire d'objets (405, 600) selon la revendication 12 ou 13, dans laquelle chaque noeud de traitement basé sur matériel (605, 610) comprend en outre :
un routeur de noeud (620) couplé en communication à chacun des un ou plusieurs modules de mémoire (625, 630) du noeud (605, 610) et adapté pour router des objets de mémoire ou des portions d'objets de mémoire entre les un ou plusieurs modules de mémoire (625, 630) du noeud (605, 610) ; et
un ou plusieurs routeurs internœuds (615) couplés en communication à chaque routeur de noeud (620), dans lequel chacun de la pluralité de noeuds (605, 610) de la matrice de mémoire d'objets (405, 600) est couplé en communication à au moins un des routeurs internœuds (615) et adapté pour router des objets de mémoire ou des portions d'objets de mémoire entre la pluralité de noeuds (605, 610).
